Europäisches Patentamt

European Patent Office

Office européen des brevets

(19)

(11) Numéro de publication: **0 007 819**
**B1**

(12) **FASCICULE DE BREVET EUROPEEN**

(45) Date de publication du fascicule de brevet: **12.08.81**

(51) Int. Cl.³: **B 60 P 3/42**

(21) Numéro de dépôt: **79400412.7**

(22) Date de dépôt: **20.06.79**

(54) **Véhicule utilitaire léger à plateau pouvant recevoir un compartiment de charge utile amovible en bloc.**

(30) Priorité: **11.07.78 FR 7820666**

(43) Date de publication de la demande:
**06.02.80 Bulletin 80/3**

(45) Mention de la délivrance du brevet:
**12.08.81 Bulletin 81/32**

(84) Etats Contractants Désignés:
**DE GB IT**

(56) Documents cités:
CH - A - 282 581
DE - C - 1 219 814
FR - A - 1 372 801
FR - A - 1 510 022
FR - A - 1 587 765
FR - A - 2 146 963
US - A - 2 591 380
US - A - 3 485 522
US - A - 3 652 121
US - A - 3 897 100

(73) Titulaire: **SOCIETE ANONYME AUTOMOBILES CITROEN**
**117 à 167, Quai André Citroen**
**F-75747 Paris Cedex 15 (FR)**

(73) Titulaire: **AUTOMOBILES PEUGEOT**
**75, avenue de la Grande Armée**
**F-75116 Paris (FR)**

(72) Inventeur: **Fabre, Eric**
**20, rue d'Epinay**
**F-91700 Sainte Genevieve Des Bois (FR)**

(74) Mandataire: **Michardiere, Bernard et al,**
**J. Fort; M.H. Jacquelin Cabinet PLASSERAUD 84, rue d'Amsterdam**
**F-75009 Paris (FR)**

Courier Press, Leamington Spa, England.

Véhicule utilitaire léger à plateau pouvant recevoir un compartiment de charge utile amovible en bloc

L'invention est relative à des perfectionnements apportés aux véhicules utilitaires légers qui comportent une cabine, située en partie avant, et, defrière la cabine, une carrosserie du type fourgon ou fourgonnette à parois rigides, délimitant un volume intérieur destiné, notamment, au transport d'objets ou de marchandises, cette carrosserie constituant une sorte de boîtier qui recouvre la structure inférieure du véhicule située derrière la cabine, structure inférieure notamment aménagée avec un plancher, ladite carrosserie étant fixée à cette structure inférieure du véhicule et à la partie arrière de la cabine, de manière démontable, les parois de cette carrosserie étant agencées et reliées entre elles d'une manière suffisamment rigide pour que ladite carrosserie puisse être retirée en bloc du véhicule, sans subir de déformation permanente préjudiciable, le véhicule se trouvant ainsi transformé en véhicule à plateau.

Par véhicules utilitaires légers, on désigne des véhicules dont la masse totale en charge n'excède pas 3500 Kg.

On connaît déjà des véhicules du genre défini précédemment. En particulier, le brevet U.S. 3 485 522 montre un véhicule dans lequel une carrosserie auxiliaire, formée par une sorte de boîtier, est fixée de manière démontable sur le véhicule, derrière la cabine. Cette carrosserie auxiliaire comporte une paroi frontale, deux parois latérales et une paroi arrière qui s'étend vers le bas, jusqu'au plateau de véhicule. La paroi arrière, reliée aux parois latérales et au toit de la carrosserie auxiliaire, contribue de manière sensible à la rigidité de l'ensemble.

Or, il est souhaitable, notamment dans le cas de véhicules utilitaires légers, de pouvoir disposer d'un accès maximum par l'arrière au volume intérieur limité par cette carrosserie auxiliaire. La suppression, pratiquement totale, de la paroi arrière pose des problèmes au niveau de l'obtention d'une rigidité suffisante. Il convient, en outre, que la fabrication d'une telle cabine auxiliaire reste d'un prix de revient abordable.

La présente invention a pour but, surtout, d'apporter un remède aux difficultés évoquées précédemment, et de rendre les véhicules utilitaires légers, du genre en question, tels que la carrosserie du type fourgon ou fourgonnette, fixée de manière démontable, conserve une rigidité suffisante même si la paroi arrière est pratiquement totalement ouverte, tout en restant d'une fabrication relativement économique.

Selon l'invention, un véhicule utilitaire léger du genre en question est caractérisé par le fait que la carrosserie démontable en bloc comprend deux panneaux latéraux reliés, à leur partie supérieure, par un pavillon, les bords supérieurs des panneaux latéraux et les bords adjacents du pavillon étant conformés de manière à réaliser un corps creux de rigidification lors de leur assemblage, le pavillon étant muni, à sa partie arrière, d'une traverse permettant de réaliser un corps creux transversal.

L'invention permet, ainsi, de réaliser la carrosserie démontable à partir d'éléments de forme simple, cette carrosserie démontable étant suffisamment rigide pour être ouverte au maximum sur sa partie arrière.

Les bords longitudinaux du pavillon comportent une retombée latérale à gradins, destinée à former la partie intérieure du corps creux, tandis que les bords supérieurs des panneaux latéraux présentent un fond de voûte destiné à venir recouvrir les gradins du pavillon et à fomrer la partie extérieure du corps creux.

L'extrémité arrière du pavillon comporte deux voiles transversaux parallèles, sensiblement verticaux, reliés de place en place par des entretoises perpendiculaires au plan de ces voiles, la susdite traverse, qui permet de réaliser le corps creux transversal, comportant des rainures propres à recevoir les bords inférieurs des voiles transversaux et étant reliée au pavillon pour former ce corps creux transversal.

La carrosserie formant boîtier comporte, à sa partie arrière, de part et d'autre, un montant latéral, formant, par assemblage avec la partie arrière des panneaux latéraux, un corps creux à orientation sensiblement verticale, ces montants latéraux comportant, à leur partie supérieure, des retours situés dans un plan transversal et propres à venir s'appliquer contre le voile arrière du pavillon pour y être fixés; la traverse comporte avantageusement un prolongement qui vient s'appliquer contre le bord latéral extérieur du montant de manière à pouvoir y être fixé, tandis que le bord latéral intérieur du montant vient s'appliquer contre un retour de la traverse formant goutière.

Le pavillon comporte, à sa partie avant, une retombée dont le galbe plongeant est aménagé pour favoriser le raccordement avec un arceau du toit de la cabine de l'unité motrice.

Les éléments de la carrosserie formant boîtier sont ainsi assemblés par emboîtement réciproque de manière à assurer la création de corps creux de rigidité au niveau des zones soumises à des sollicitations mécaniques de telle sorte que la carrosserie forme un bloc qui peut être retiré de la structure du véhicule sans que l'on ait à craindre des déformations permanentes préjudiciables, en dépit de l'épaisseur réduite des parois de la carrosserie par rapport à leur longueur et à leur largeur.

Avantageusement, les éléments de cette carrosserie sont réalisés en matière plastique.

L'assemblage et le verrouillage des éléments peut être assuré par collage lorsque les éléments sont en matière plastique, ou soudage ou vissage ou tout moyen de fixation approprié.

Le fixation de la carrosserie formant boîtier sur la structure du véhicule est assurée par des moyens d'attache amovibles appropriés tels que vis/écrou; des parois de fixation sont prévues sur les bords inférieurs des panneaux latéraux et en extrémité frontale de la carrosserie pour la fixation sur l'arceau de la cabine.

L'invention consiste, mises à part les dispositions exposées ci-dessus, en certaines autres dispositions dont il sera plus explicitement question ci-après à propos d'un mode de réalisation particulier décrit avec référence aux dessins ci-annexés mais qui n'est nullement limitatif.

La figure 1, de ces dessins, est une vue en perspective, simplifiée, de l'arrière droite d'un véhicule selon l'invention.

La figure 2 est une vue, en perspective, de l'arrière droite du bloc de carrosserie démontable, le battant supérieure de porte arrière et le hayon rabattable ayant été enlevés.

La figure 3 est un détail, en perspective, de la fixation de la partie inférieure de la carrosserie sur la structure du véhicule dans la zone désignée par III—III figure 2.

La figure 4 est un détail, en perspective, montrant la fixation de la partie avant de la carrosserie sur l'arceau de la cabine, dans la zone désignée par IV—IV figure 2.

La figure 5 est un détail, en perspective, illustrant la formation d'un corps creux avec le montant arrière gauche, dans la zone désignée par V—V figure 2.

La figure 6 est une coupe par un plan vertical longitudinal (par rapport au véhicule) de la partie arrière du pavillon et de la traverse formant corps creux.

La figure 7 est une coupe suivant VII—VII figure 6.

La figure 8 est une vue partielle, en perspective, de l'avant gauche du pavillon.

La figure 9 est une coupe transversale du bord de pavillon au niveau de la ligne IX—IX figure 8.

La figure 10 est une coupe rabattue au niveau de la ligne X—X, figure 8.

La figure 11, enfin, est une vue en perspective éclatée du montant arrière droit, de la traverse et de l'arrière du pavillon avant assemblage.

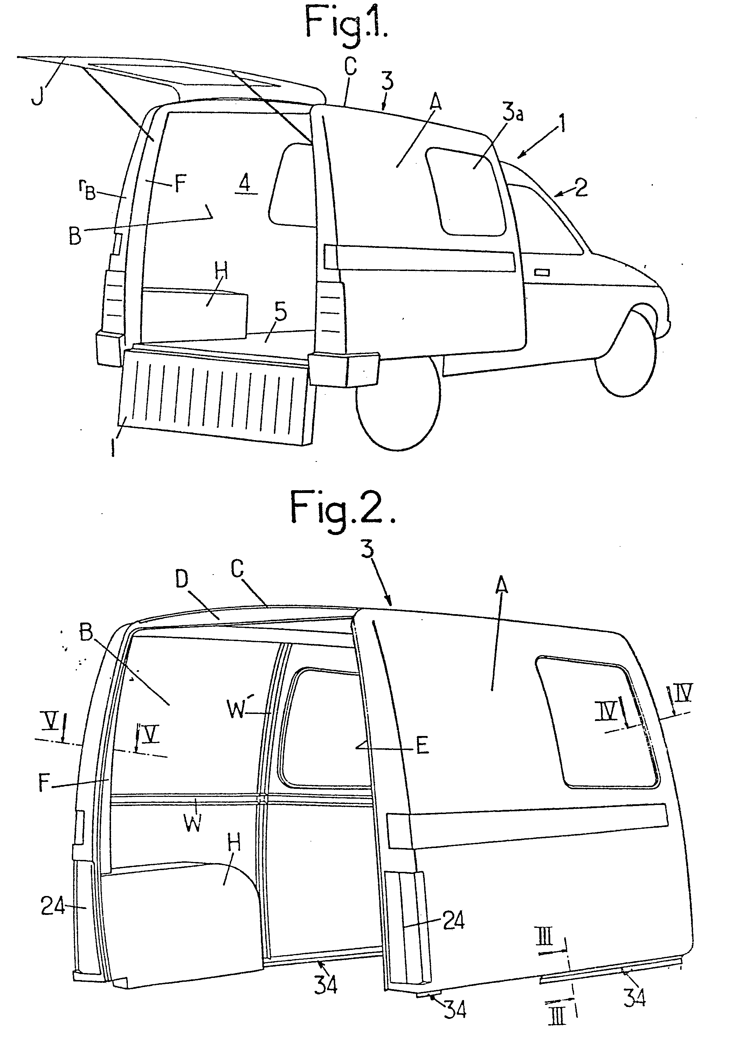

En se reportant à la figure 1, on peut voir un véhicule automobile utilitaire léger 1 comportant une cabine 2, située en partie avant, et, derrière la cabine, une carrosserie 3, notamment munie de fenêtres 3a, du type fourgonnette, à parois rigides, délimitant un volume intérieur 4 pour le transport d'objets ou de marchandises. La carrosserie 3 constitue une sortie de boîtier qui recouvre la structure inférieure 5 aménagée avec un plancher.

La carrosserie 3 est fixée à la structure inférieure 5 et à la partie arrière de la cabine 2 de manière démontable, et les parois de la carrosserie 3 sont agencées et reliées entre elles de manière suffisamment rigide pour que cette carrosserie puisse être retirée en bloc du véhicule, sans subir de déformation permanente préjudiciable; le véhicule 1 se trouve alors transformé en véhicule à plateau.

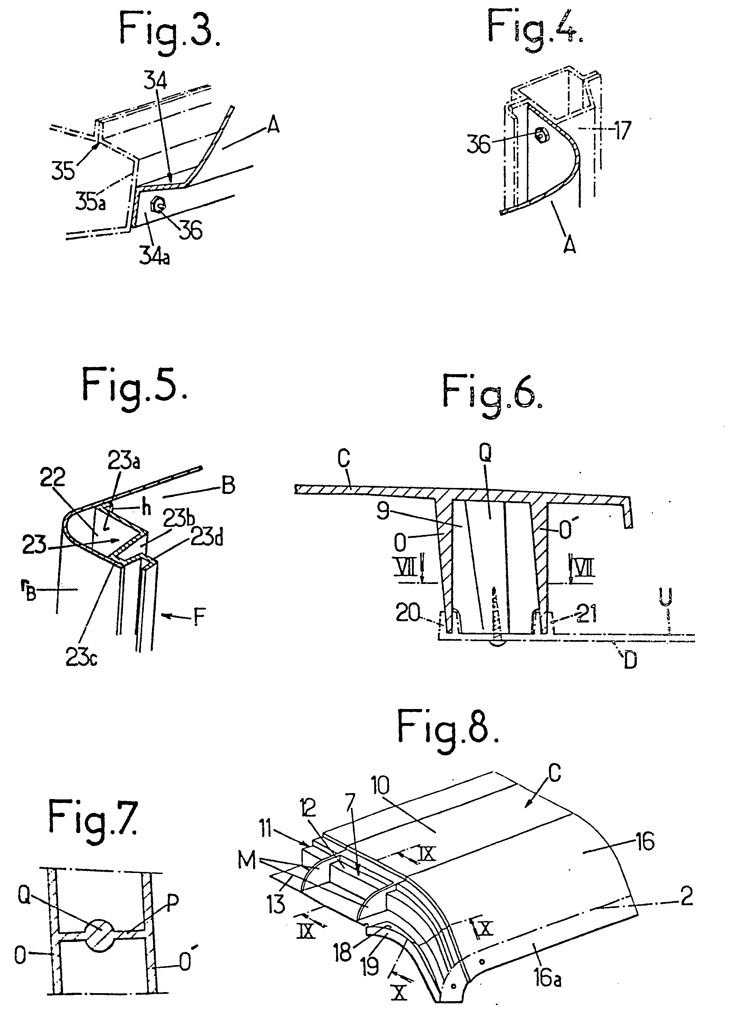

La structure d'enveloppe qui forme la carrosserie démontable et qui délimite le volume 4 comprend deux panneaux latéraux A, B, reliés à leur partie supérieure par un pavillon C. Comme visible sur les figures 8 à 10, les bord supérieurs 6 des panneaux latéraux et les bords adjacents 7 du pavillon sont conformés de manière à réaliser un corps creux 8 de rigidification lors de leur assemblage. Le pavillon C est muni à sa partie arrière d'une traverse D (fig. 6) permettant de réaliser un corps creux transversal 9.

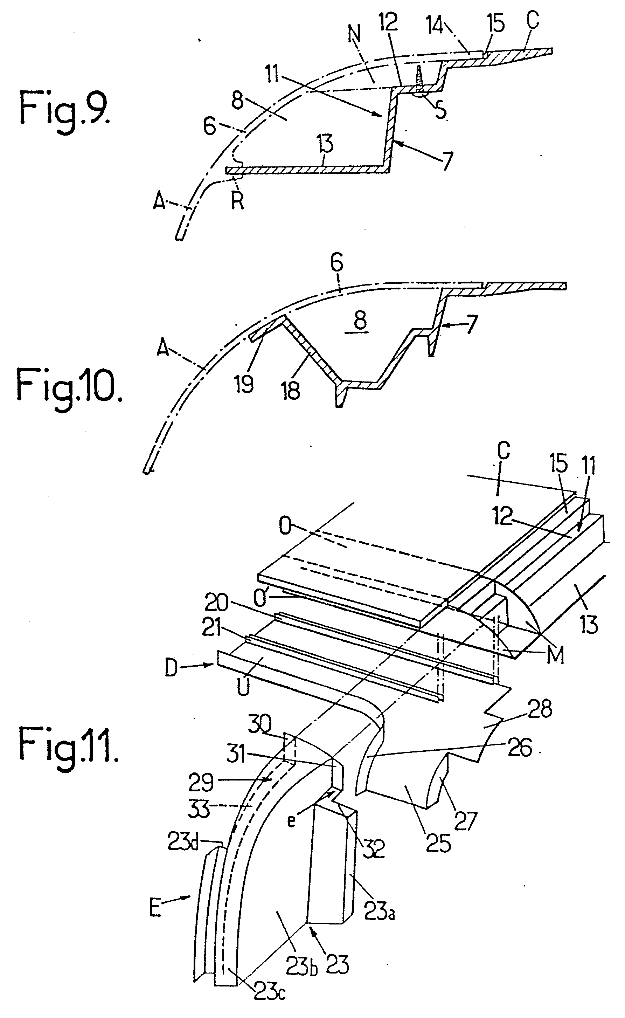

Comme visible sur la figure 8, le pavillon C est constitué d'un fond de voûte 10 à faible courbure et de retombéeslatérales 11 à gradins 12, 13, s'étendant suivant les bords longitudinaux 7, de chaque côté du pavillon. La retombée latérale 11 forme la partie intérieure du corps creux 8 (fig. 9). Les bords supérieurs 6 des panneaux latéraux ont une courbure convexe (fig. 9) de manière à former un fond de voûte qui vient recouvrir les gradins 12, 13 du pavillon pour former la partie extérieure du corps creux.

Chaque panneau A, B, comporte sur sa surface intérieure et vers son extrémité supérieure, une moulure rainurée R (fig. 9) longitudinale propre à recevoir le bord d'une partie sensiblement horizontale du gradin 13. La bordure extrême supérieure 14 des panneaux vient s'appliquer sur un premier plan de surface 15 décroché, de la retombée latérale 11, de telle sorte qu'il y ait continuité du profil de carène supérieur et raccordement, sans décroché, des surfaces extérieures des panneaux latéraux A, B et du pavillon C.

Les bords supérieurs de panneaux 6 comportent, vers l'intérieur, des bossages transversaux N qui viennent prendre appui sur une plate-forme constituée par le gradin 12, de la retombée 11. Ces bossages N peuvent être verrouillés sur cette plate-forme au moyen de vis S traversant un trou prévu dans la paroi du gradin 12.

Comme visible sur la figure 8, la retombée latérale 11 est raidie et cloisonnée régulièrement par une pluralité de goussets transversaux M, d'arêtes curvilignes propres à épouser la forme de la surface intérieure concave du bord 6 supérieur de panneau. Ces goussets M sont situés dans des plans perpendiculaires aux génératrices du volume étagé formé par la retombée 11. Les bossages N d'appui et de serrage sont intercalés entre les goussets M.

Dans la partie frontale 16 (fig. 8) du pavillon C c'est-a-dire dans la partie située à l'avant de ce pavillon et donc juste derrière la cabine 2, le front de voûte du pavillon se termine en forme de retombée dont le galbe plongeant est aménagé pour favoriser la liaison du pavillon avec, notamment, un arceau 17 (fig. 4) classique de raccordement au toit de cabine 2. Le galbe comporte une bordure extrême avant 16a située dans un plan transversal vertical pour la fixation à l'arceau 17. Selon une autre possibilité la partie 16 est reliée à une cloison de fermeture limitant le volume intérieur 4 vers l'avant et assurant la jonction au niveau de la plate-forme porteuse 5.

Les figures 8 et 10 permettent de suivre l'évolution de la retombée latérale 11 à gradins au niveau de la région frontale 16 du pavillon de manière à assurer le continuité du corps creux 8 jusqu'à la jonction avec la cabine 2. Le bord extérieur 18 (fig. 10) de la retombée au niveau de la zone frontale est relevé vers l'exterieur de telle sorte que la section transversale de cette retombée a sensiblement la forme d'un V comme visible sur la figure 10. On voit, d'après la figure 8, que le plan de ce V est sensiblement vertical dans la partie de la retombée 11 correspondant au début de la zone 16 et s'incline de plus en plus vers l'horizontale pour la partie correspondant à l'extrémité avant de la zone 16. La bordure extérieure 19 de la branche 18 forme un rabat vers l'extérieur de manière à venir épouser la surface intérieure du panneau latéral contre lequel elle est fixée. Ainsi, le corps creux de rigidification 8 s'incurve vers le bas et vers l'avant en bordure de la zone 16.

Les éléments de la carrosserie sont préfabriqués et réalisés, avantageusement, en matière plastique. Ils peuvent être asse·¬blés par soudage ou collage selon leurs zones de contact.

On voit, ainsi, que sur chaque bord longitudinal du pavillon C est créé d'un bout à l'autre, un corps creux 8 de rigidification.

A l'arrière du pavillon C, le corps creux transversal 9 établit une liaison entre les deux corps creux longitudineaux 8.

L'extrémité arrière du pavillon comporte deux voiles transversaux O, O' (fig. 6 et 7) parallèles et sensiblement verticaux, reliés de place en place par des entretoises P perpendiculaires au plan de ces voiles. Chaque entretoise comporte un noyau médian Q utilisé comme colonnette de fixation pour la traverse D, cette colonnette comportant à son extrémité inférieure un trou taraudé destiné à recevoir une vis de fixation de ladite traverse.

La traverse D comporte des bossages transversaux 20, 21, dans lesquels sont prévues des rainures propres à recevoir les bords inférieurs des voiles transversaux O, O' de manière à former ainsi, avec les voiles, le corps creux transversal 9. La traverse D se prolonge, vers l'arrière, par un profil de gouttière U, notamment aménagé pour assurer le logement d'un dispositif d'articulation d'un battant de porte arrière J (fig. 1) et pour autoriser le débattement de relevage de ce battant ainsi que pour recueillir les eaux de ruissellement.

On voit qu'une ceinture annulaire de rigidité se trouve constituée suivant trois des côtés supérieurs de la carrosserie 3, par les deux corps longitudineaux 8 et le corps transversal 9 qui les relie.

L'armature travaillante supérieure, ainsi constituée est soutenue latéralement par les panneaux A, B, raidis par un faisceau de nervures W, W' (fig. 2) disposées avantageusement de manière à se croiser à angle droit et à être respectivement horizontales et verticales. On peut, ainsi, utiliser le rainurage constitué, à des fins utilitaires telles que disposition de cloisons de séparation ou de tablettes de stockage dont les bords sont engagés dans ces rainures et/ou supportés par elles.

Le pavillon C est supporté au niveau des arêtes arrière par des montants latéraux E, F (fig. 2, 5 et 11) formant, par assemblage avec les panneaux latéraux, corps creux de rigidité 22 (fig. 5) à orientation sensiblement verticale.

Comme visible sur la figure 5, chaque montant latéral tel que F comporte, du côté extérieur, une partie 23, sensiblement en angle droit, tournant sa concavité vers l'extérieur; un côté 23a de cette partie en angle droit est situé dans un plan sensiblement perpendiculaire an panneau B et se termine par une bordure h retournée à angle droit, propre à s'appliquer contre le panneau B pour la fixation, notamment par collage. L'autre côté 23b est situé sensiblement dans un plan longitudinal vertical ce côté s'étend vers l'arrière jusqu'à une bordure transversale 23c suivie d'un retour 23d à section transversale en U formant rainure.

Le panneau B présente, à son extrémité arrière, un retour $r_B$ dans un plan transversal, propre à s'appliquer contre la bordure 23c pour fixation contre celle-ci. Le corps creux 22 se trouve ainsi formé. Il en est de même pour le panneau A et le montant E.

L'ensemble de la carrosserie est complété, à sa partie arrière, par l'adjonction de passage de roues tel que H (fig. 2); des ouvertures 24 sont prévues en zone basse arrière du retour $r_B$ du panneau pour permettre la mise en place et l'encastrement des dispositifs de signalisations diverses. (feux de position, clignotants, etc.). Cette ouverture 24 a sensiblement la hauteur du passage de roue H et le corps creux de rigidification à orientation sensiblement verticale est alors réalisé en fermant la concavité limitée par les bords 23b, 23c et 23d du montant F par des parois appartenant au passage de roues H et venant se fixer, notamment par collage, contre ce montant.

La jonction des montants arrière latéraux E, F à traverse arrière supérieure D et au pavillon C est illustrée sur la figure 11.

Les deux voiles transversaux parallèles O, O' du pavillon C viennent se chausser à l'intérieur des deux rainures transversales pratiquées dans les bossages 20, 21 de la traverse D. Cette traverse présente, vers l'arrière, une retombée 25 de forme arrondie, comportant un bord intérieur relevé 26 assurant une retenue qui prolonge, vers le bas, celle de la gouttière U.

Cette retombée 25 comporte, vers l'extérieur, un bord 27 orienté vers le bas situé dans un plan parallèle à celui du bord 26. Le bord 27 est limité à la partie en saillie de la retombée 25; ce bord 27 est destiné à venir s'appliquer contre la face intérieure de la paroi 23*b* du montant E.

La traverse D comporte, à son extrémité latérale extérieure, une avancée transversale 28 constituant une sorte de plate-forme.

La partie supérieure 29 du montant E est arrondie et comporte à son extrémité avant frontale deux bords frontaux 30, 31. La paroi extérieure 23*a* ne s'étend pas jusqu'à l'extrémité supérieure du montant E et est limitée par un bord supérieur transversal 32, en forme d'angle droit, rejoignant l'extrémité inférieure du bord frontal extérieur 31. Une échancrure *e* est ainsi constituée à l'extrémité supérieure de la partie extérieure du montant E.

Do côté intérieur, le retour 23*d* s'arrête avant d'atteindre le bord frontal 30; seule une bordure latérale 33 s'étend jusqu'à l'extrémité inférieure du bord 30.

L'assemblage des trois éléments représentés sur la figure 11 s'effectue dans les conditions suivantes.

Les bords frontaux 30, 31, du montant E sont appliqués et fixés contre la face arrière du voile O' du pavillon C.

La traverse D est alors mise en place de manière que les bords inférieurs des voiles O, O' s'engagent dans les rainures transversales de la traverse D.

Le bord latéral 32, à retour d'équerre, du montant E s'applique sur l'avancée 28, formant plate-forme de la traverse D.

La retombée 25 de cette traverse s'engage dans la concavité du montant E et le bord rabattu 27 de cette retombée s'applique contre la face interne de la paroi 23*b*.

La bordure latérale 33 du montant E s'applique contre la retombée 25 et le bord relevé 26 de cette retombée vient recouvrir, par sa partie inférieure, la surface extérieure du retour 23*d*.

L'operation finale d'assemblage est réalisée en couvrant l'ensemble par le panneau latéral A comme déjà expliqué précédemment. Il en est de même pour l'autre montant F et l'autre extrémité de la traverse D.

Les éléments, notamment en matière plastique, de la carrosserie 3 ainsi assemblés par emboîtement réciproque assurant la création de corps creux de rigidité et verrouillés par collage ou vissage, forment une carrosserie ou boîtier suffisamment rigide pour pouvoir être déplacé en bloc sans qu'il en résulte des dommages préjudiciables pour cette carrosserie.

Pour la fixation de cette carrosserie à la structure du véhicule, on peut prévoir, comme montré sur la figure 2, à la partie inférieure des panneaux latéraux A, B, des bordures telles que 34 (fig. 2 et 3) à sections transversales sensiblement en angle droit tournant leur concavité vers l'extérieur et comportant une paroi verticale 34*a* (fig. 3) destinée à venir s'appliquer contre une paroi verticale 35*a* d'une membrure rigide 35 appartenant à la structure inférieure du véhicule. Des moyens d'attache amovibles sont prévus entre la membrure 35 et la paroi 34*a*, ces moyens d'attache étant notamment constitués par des ensemble vis-écrous, schématiquement représentés en 36.

La partie avant de la carrosserie est fixée, comme déjà indiqué, sur un arceau 17 de la cabine. Les panneaux latéraux A, B, présentent à leur extrémité avant, un retour situé dans un plan transversal propre à s'appliquer avec la bordure 16*a* du pavillon (fig. 8), contre une paroi transversale de l'arceau 17 pour y être fixés par des moyens d'attache amovibles tels qu'ensembles vis-écrous 36. Pour toutes ces fixations, on peut prévoir, avantageusement, des vis fixées à demeure sur les membrures 35 et sur l'arceau 17. Lors de la mise en place, il suffit d'engager les trous prévus dans les bordures de la carrosserie sur ces vis puis de fixer l'ensemble à l'aide des écrous.

Un joint d'étanchéité peut être prévu entre l'arceau 17 et la paroi de la carrosserie.

L'ouverture arrière de la carrosserie peut être fermée par un battant supérieur de porte arrière J dont l'articulation est logée dans la gouttière U de la traverse D et par un panneau de hayon inférieur I rabattable.

Ce panneau de hayon I est articulé, avec un dispositif approprié, en extrémité arrière du plateau de charge 5. L'ensemble est agencé de manière que ce hayon I puisse être placé au choix, dans l'une des trois positions suivantes: position de fermeture (le hayon I est relevé à la verticale); position horizontale (la hayon I prolonge alors vers l'arrière le plateau 5); position rabattue (représentée sur la figure 1) pour laquelle le hayon I permet d'approcher au maximum du plateau 5.

L'immobilisation du hayon I dans ces trois positions, de même que l'immobilisation du battant supérieur J est réalisée à l'aide de tout moyen approprié, par exemple avec des arcs-boutants ou des tirants télescopiques.

Le hayon I est avantageusement formé par une structure cloisonnée prise en sandwich entre deux plaques de telle sorte que ce hayon I puisse supporter les charges; la structure cloisonnée (non visible) présente un quadrillage nervuré garantissant une forte rigidité au hayon sous les efforts de torsion ou de flexion. Lorsque cette structure est prise en sandwich entre les deux plaques ou panneaux du hayon, ce dernier constitue un corps creux très rigide.

Ainsi, on obtient un véhicule polyvalent pouvant être transformé rapidement d'un véhicule du type fourgonnette en un véhicule à plateau ou inversement par simple déconnexion ou reconnexion, sur la structure arrière du véhicule, d'une carrosserie 3 en forme de boîtier rigide, et démontable en bloc.

Il est à noter qu'on prévoit généralement le plancher 5 directement sur la structure arrière du véhicule. Eventuellement, ce plancher 5 pourrait être solidaire des bords inférieurs des panneaux A et B et être démonté en bloc, avec la carrosserie 3.

Du fait qu'il s'agit d'un véhicule léger, la carrosserie 3 démontable en bloc conserve des dimensions relativement réduites de telle sorte que le poids de cette carrosserie ainsi que son encombrement sont, également, relativement réduits. Il en résulte que la transformation du véhicule peut être effectuée non seulement rapidement, du fait du démontage ou montage en bloc de la carrosserie, mais, aussi, facilement, par un personnel réduit, éventuellement par une seule personne, sans avoir à mettre en oeuvre des moyens de levage spéciaux. On comprend donc l'intérêt que peut présenter une telle solution.

**Revendications**

1. Véhicule utilitaire léger comportant une cabine (2) située en partie avant, et, derrière la cabine, une carrosserie (3) du type fourgon ou fourgonnette, à parois rigides, délimitant un volume intérieur (4) destiné notamment, au transport d'objets ou de marchandises, cette carrosserie constituant une sorte de boîtier qui recouvre la structure inférieur notamment située derrière la cabine, structure inférieure notamment aménagée avec un plancher, ladite carrosserie (3) étant fixée à la structure inférieure (5) du véhicule et à la partie arrière de la cabine (2) de manière démontable et les parois de cette carrosserie étant agencées et reliées entre elles d'une manière suffisamment rigide pour que ladite carrosserie puisse être retirée en bloc du véhicule, sans subir de déformation permanente préjudiciable, ledit véhicule se trouvant ainsi transformé en véhicule à plateau, caractérisé par le fait que la carrosserie (3) démontable en bloc, comprend deux panneaux latéraux (A, B) reliés à leur partie supérieure, par un pavillon (C), les bords supérieurs (6) des panneaux latéraux et les bords adjacents (7) du pavillon étant conformés de manière à réaliser un corps creux de rigidification lors de leur assemblage, le pavillon étant muni, à sa partie arrière, d'une traverse (D) permettant de réaliser un corps creux transversal (9).

2. Véhicule selon la revendication 1, caractérisé par le fait que les bords longitudinaux (7) du pavillon comportent une retombée latérale (11) à gradins (12, 13), destinée à former la partie intérieure du corps creux (8), tandis que les bords supérieurs (6) des panneaux latéraux présentent un fond de voûte destiné à venir recouvrir les gradins du pavillon et à former la partie extérieure du corps creux.

3. Véhicule selon la revendication 2, caractérisé par le fait que chaque panneau latéral (A, B) comporte, vers son extrémité supérieure, une moulure rainurée (R) longitudinale propre à recevoir le bord d'une partie sensiblement horizontale d'un gradin (13) du pavillon, la bordure extrême supérieure (14) des panneaux venant s'appliquer sur un premier plan de surface (15) décroché de la retombée latérale (11) du pavillon, de telle sorte qu'il y ait continuité du profil de carène supérieur.

4. Véhicule selon la revendication 2 ou 3, caractérisé par le fait que les bords supérieurs (6) de panneaux comportent, vers l'intérieur, des bossages transversaux (N) qui viennent prendre appui sur une plate-forme constituée par un gradin (12) de la retombée latérale (11) du pavillon, ces bossages pouvant notamment être verrouillés sur la plate-forme au moyen de vis.

5. Véhicule selon l'une quelconque des revendications 2 à 4, caractérisé par le fait que la retombée latérale (11) du pavillon est raidie et cloisonnée par une pluralité de goussets transversaux (M), d'arêtes curvilignes propres à épouser la forme de la surface intérieure concave du bord supérieur (6) de panneau.

6. Véhicule selon l'une quelconque des revendications précédentes, caractérisé par le fait que l'extrémité arrière du pavillon comporte deux voiles transversaux (O, O') parallèles, sensiblement verticaux, reliés de place en place par des entretoises (P) perpendiculaires au plan de ces voiles, la susdite traverse (D), qui permet de réaliser le corps creux transversal, comportant des rainures propres à recevoir les bords inférieurs des voiles transversaux et étant reliée au pavillon pour former ce corps creux transversal.

7. Véhicule selon la revendication 2 ou selon l'ensemble de la revendication 2 et de l'une quelconque des revendications 3 à 6, caractérisé par le fait que le pavillon comporte à sa partie avant (16) une retombée dont le galbe plongeant est aménagé pour favoriser le raccordement avec un arceau (17) du toit de la cabine, la susdite retombée latérale, de chaque côté du pavillon évoluant au niveau de la région frontale de ce pavillon de manière à assurer la continuité des corps creux (8) latéraux jusqu'à la jonction avec la cabine (2).

8. Véhicule selon l'une quelconque des revendications précédentes, caractérisé par le fait que la carrosserie (3) formant boîtier comporte à sa partie arrière, de part et d'autre, un montant latéral (E, F), formant, par assemblage avec la partie arrière des panneaux latéraux, un corps creux (22) à orientation sensiblement verticale.

9. Véhicule selon l'ensemble des revendications 6 et 8, caractérisé par le fait que les montants arrières latéraux (E, F) sont réunis à la traverse supérieure (D) et au pavillon (C), ces montants latéraux comportant, à leur partie supérieure, des retours (30, 31) situés dans un plan transversal et propres à venir s'appliquer contre le voile arrière (O') du pavillon pour y être fixé, tandis que la traverse (D) comporte une retombée (25) s'engageant dans la concavité du montant, et, à chaque extrémité latérale une avancée transversale (28) formant une plate-forme contre laquelle vient s'appliquer un bord latéral (32), à retour d'équerre, du montant.

10. Véhicule selon l'une quelconque des revendications précédentes, caractérisé par le fait que, pour la fixation de la carrosserie sur la structure du véhicule, des parois de fixation (34) sont prévues sur les bords inférieurs des panneaux latéraux et en extrémité frontale de la carrosserie, des moyens d'attache amovibles, notamment formés par des ensembles vis-écrous (36), étant prévus.

11. Véhicule selon l'une quelconque des revendications précédentes, caractérisé par le fait que la carrosserie (3) formant boîtier, susceptible d'être démontée en bloc, est réalisée à partir d'éléments préfabriqués, en matière plastique, notamment assemblés par collage ou soudage.

## Claims

1. A light utility vehicle comprising a cab (2) at the front and a body (3) in the form of a van or light van behind the cab and having rigid walls and bounding an inner space (4) designed *inter alia* for conveying articles or goods, the body forming a kind of box which covers the substructure (5) of the vehicle behind the cab, the substructure *inter alia* comprising a floor, the body (3) being releasably secured to the vehicle substructure (5) and the rear of the cab (2) and the body walls being designed and interconnected in a sufficiently rigid manner for the body to be withdrawn in one piece from the vehicle without suffering harmful permanent deformation, the vehicle having a flat surface when the body is removed, characterised in that the body (3), which can be removed in one piece, comprises two side panels (A, B) connected at the top by a roof (C), the top edges (6) of the side panels and the adjacent sides (7) of the roof being shaped to produce a solid reinforcing member when they are fitted together, the roof having a rear cross-member (D) for forming a hollow transverse member (9).

2. A vehicle according to claim 1, characterised in that the longitudinal edges (7) of the roof have a descending side part (11) formed with steps (12, 13) adapted to form the inner part of the hollow member (8), while the top edges (6) of the side panels have an arched end adapted to cover the steps in the roof and form the outside of the hollow member.

3. A vehicle according to claim 2, characterised in that towards its top end each side panel (A, B) has a grooved longitudinal profile (R) adapted to receive the edge of a substantially horizontal part of a roof step (13), the top edge (14) of the panels pressing against a first offset surface plane (15) of the side part (11) of the roof, so that the top part of the body has a continuous cross-section.

4. A vehicle according to claim 2 or 3, characterised in that towards the interior the top edges (6) of the panels have transverse projections (N) which bear on a flat surface comprising a step (12) of the descending side part (11), the projections being adapted *inter alia* to be secured to the flat surface by screws.

5. A vehicle according to any of claims 2 to 4, characterised in that the descending side part (11) of the roof is stiffened and partitioned by a number of transverse plates (M) having curved edges adapted to match the shape of the inner concave surface of the top edge (6) of the panel.

6. A vehicle according to any of the preceding claims, characterised in that the rear end of the roof has two parallel substantially vertical transverse partitions (O, O') interconnected at intervals by struts (P) perpendicular to the plane of the partitions, the cross-member (D) for forming the hollow transverse member comprising grooves adapted to receive the bottom edges of the transverse partitions, the cross-member also being connected to the roof to form the hollow transverse member.

7. A vehicle according to claim 2, either alone or with any of claims 3 to 6, characterised in that at the front (16) the roof has a descending part having a slope adapted to facilitate connection with a curved member (17) of the cab roof, and at each side of the body roof the said descending part so extends at the front region of the body roof as to ensure continuity of the hollow side members (8) up to the junction with the cab (2).

8. A vehicle according to any of the preceding claims, characterised in that the body (3), which forms a box, has a lateral upright (E, F) at the rear on both sides, the uprights being secured to the rear parts of the side panels to form a substantially vertical hollow member (22).

9. A vehicle according to claims 6 and 8 together characterised in that the rear side uprights (E, F) are connected to the top cross-member (D) and the roof (C), and at the top the uprights have returns (30, 31) in a transverse plane and adapted to bear against the rear partition (O') of the body roof so as to be secured thereto, whereas the cross-member (D) has a descending part (25) which engages in the concave portion of the upright and each side end of member (D) has a transverse projection (28) forming a flat surface against which bears a side surface (32) of the upright, the surface (32) being bent at right-angles.

10. A vehicle according to any of the preceding claims, characterised in that, in order to fix the body on the vehicle structure, fixing walls (34) are provided on the bottom edges of the side panels and at the front end of the body, and removable securing means are provided, *inter alia* nut and screw assemblies (36).

11. A vehicle according to any of the preceding claims, characterised in that the box body (3) adapted to be removed in one piece is made of prefabricated plastics components, assembled *inter alia* by sticking or welding.

**Patentansprüche**

1. Leichtes Nutzfahrzeug, umfassend ein in einem vorderen Abschnitt gelegenes Fahrerhaus (2) und hinter diesem einen Wagenaufbau (3) nach Art eines Kastenwagens oder Lieferwagens mit starren Wänden, die einen Innenraum (4) begrenzen, der insbesondere zum Transport von Gegenständen oder Waren bestimmt ist, wobei der Wagenaufbau eine Art Kasten bildet, der das hinter dem Fahrerhaus liegende und insbesondere mit einer Platte oder Pritsche versehene Untergestell (5) des Fahrzeugs überdeckt und an dem Untergestell (5) sowie dem rückwärtigen Abschnitt des Fahrerhauses (2) lösbar befestigt ist, und wobei die Wände des Wagenaufbaus hinreichend starr ausgebildet und miteinander verbunden sind, so daß der Wagenaufbau ohne nachteilige bleibende Verformung als Ganzes vom Fahrzeug abnehmbar und das Fahrzeug auf diese Weise in ein Fahrzeug mit offener Laderfläche oder einen Pritschenwagen umwandelbar ist, dadurch gekennzeichnet, daß der als Ganzes abnehmbare Wagenaufbau (3) zwei Seitenwände (A, B) aufweist, die an ihren oberen Abschnitten durch eine Dachhaube (C) miteinander verbunden sind, daß die oberen Ränder (6) der Seitenwände und die angrenzenden Ränder (7) der Haube in der Weise ausgebildet sind, daß sie bei ihrem Zusammenbau einen hohlen Versteifungskörper bilden, und daß die Haube an ihrem hinteren Abschnitt mit einer Traverse (D) zur Bildung einer hohlen Querstrebe (9) versehen ist.

2. Fahrzeug nach Anspruch 1, dadurch gekennzeichnet, daß die Längsränder (7) der Haube einen treppenförmigen seitlichen Abstaz (11) mit Stufen (12, 13) aufweisen, der zur Bildung des innenliegenden Abschnitts des jeweiligen Versteifungskörpers (8) bestimmt ist, und daß die oberen Ränder (6) der Seitenwände jeweils von einem Gewölbeabschnitt gebildet sind, der zur Überdeckung des treppenförmigen Absatzes der Haube und zur Bildung des außenliegenden Abschnittes des hohlen Versteifungskörpers bestimmt ist.

3. Fahrzeug nach Anspruch 2, dadurch gekennzeichnet, daß jede Seitenwand (A, B) nahe ihrem oberen Ende eine sich in Längsrichtung erstreckende Nutenleiste (R) zur Aufnahme des Randes eines im wesentlichen horizontalen Abschnittes (13) des treppenförmigen Absatzes der Haube aufweist und daß die oberste Randkante (14) der jeweiligen Seitenwand an einer ersten ebenen Stufenfläche (15) des treppenförmigen Absatzes (11) der Haube derart anliegt, daß man ein durchgehendes stromlinienförmiges Profil im Dachbereich erhält.

4. Fahrzeug nach Anspruch 2 oder 3, dadurch gekennzeichnet, daß die oberen Randabschnitte (6) der Seitenwände an ihrer Innenseite in Querrichtung verlaufende Vorsprünge (N) aufweisen, die an einer von einer Stufe (12) des treppenförmigen Absatzes (11) der Haube gebildeten Plattform zur Anlage kommen und an dieser insbesondere mit Hilfe von Schrauben befestigbar sind.

5. Fahrzeug nach einem der Ansprüche 2 bis 4, dadurch gekennzeichnet, daß der treppenförmige Absatz (11) der Haube durch eine Vielzahl von quer verlaufenden flächigen Versteifungselementen (M) versteift und unterteilt ist, deren gekrümmte Randkanten in ihrer Form und die konkave Innenfläche der oberen Randabschnitte (6) der Seitenwände angepasst sind.

6. Fahrzeug nach einem der vorhergehenden Ansprüche, dadurch gekennzeichnet, daß das rückwärtige Ende der Haube zwei parallel zueinander querverlaufende im wesentlichen vertikal gerichtete Flachprofile (O, O') trägt, die in Abständen durch senkrecht zur Ebene der Flachprofile gerichtete Querstreben (P) miteinander verbunden sind, und daß die Traverse (D), welche die Bildung der hohlen Querstrebe ermöglicht, zwei Nuten zur Aufnahme der unteren Randkanten der Flachprofile aufweist, und mit der Haube zur Bildung der hohlen Querstrebe verbunden ist.

7. Fahrzeug nach Anspruch 2 oder Anspruch 2 und einem der Ansprüche 3 bis 6, dadurch gekennzeichnet, daß die Haube an ihrem vorderen Abschnitt (16) einen Bogen aufweist, dessen abfallende Rundung zum Anschluß an einen Bügel (17) des Fahrerhausdaches ausgebildet ist, wobei der treppenförmige Absatz an jeder Seite der Haube auf Höhe des vorderen Bereiches der Haube eine Krümmung macht, um die Fortsetzung der seitlichen hohlen Versteifungen (8) bis zum Fahrerhaus (2) zu gewährleisten.

8. Fahrzeug nach einem der vorhergehenden Ansprüche, dadurch gekennzeichnet, daß der einen Kasten bildende Wagenaufbau (3) ab seinem rückwärtigen Abschnitt auf beiden Seiten eine Seitenstütze (E, F) aufweist, die beim Zusammenbau mit dem Rückwärtigen Abschnitt der Seitenwände jeweils einen im wesentlichen vertikal gerichteten Hohlkörper (22) bildet.

9. Fahrzeug nach den Ansprüchen 6 und 8, dadurch gekennzeichnet, daß dei rückwärtigen Seitenstützen (E, F) mit der oberen Traverse (D) und der Haube (C) verbunden sind, daß die Seitenstützen an ihrem jeweiligen oberen Abschnitt in einer Querebene liegende zurückgebogene Abschnitte (30, 31) zur Anlage an dem hinteren Flachprofil (O') der Haube und zur Befestigung an derselben aufweisen und daß die Traverse (D) einen Fortsatz (25) zum Eingriff in den Hohlraum der jeweiligen Seitenstütze sowie an jedem ihrer Seitenenden einen quergerichteten Vorsprung (28) aufweist, der eine Plattform bildet, und die sich ein winkelförmiger Seitenstreifen (32) der Seitenstütze anlegt.

10. Fahrzeug nach einem der vorhergehenden Ansprüche, dadurch gekennzeichnet, daß zur Befestigung des Wagenaufbaus an dem Fahrgestell des Fahrzeuges Befestigungsstege (34) an den unteren Rändern der Seitenwände angeordnet sind und daß am Vorderende des Wagenaufbaus lösbare Befestigungsmittel, insbesondere Schrauben-Muttern-Verbindungen (36) vorgesehen sind.

11. Fahrzeug nach einem der vorhergehenden Ansprüche, dadurch gekennzeichnet, daß der kastenförmige als Ganzes abnehmbare Wagenaufbau (3) aus vorgefertigen Kunststoffelementen hergestellt ist, die insbesondere durch Kleben oder Schweißen miteinander verbunden sind.

# Fig.1.

# Fig.2.

1

# Fig.3.

# Fig.4.

# Fig.5.

# Fig.6.

# Fig.7

# Fig.8.

**Fig.9.**

**Fig.10.**

**Fig.11.**